# EUROPEAN PATENT APPLICATION

(11) **EP 4 775 435 A1**
(43) Date of publication of application: **15.07.2026**
(21) Application number: 26150754.5
(22) Date of filing: 08.01.2026
(51) Int. Cl.: B60L 13/00, H04B 3/54, H04B 3/56, H04L 12/10

(54) **ENERGY TRANSMISSION AND COMMUNICATIONS SYSTEM WITH REMOTE COMMUNICATIONS INTERFACE**

(30) Priority: 08.01.2025 US 202563743003 P; 18.12.2025 US 202519425149
(71) Applicant: Conductix, Inc., Omaha NE 68127 (US)
(72) Inventor: MENTER, Joel D, Omaha, 68127 (US)
(74) Representative: Mathys & Squire

(57) **Abstract**

An energy transmission and communications system can include a power supply, a conductor to electrically couple to the power supply, and a vehicle to electrically couple to the conductor, where the vehicle is configured to travel along the conductor and receive the electrical energy from the power supply. The system can also include a signal injector to introduce a communications signal to the conductor for receipt by the vehicle, a termination for lessening reflection of the communications signal at one or both ends of the conductor, and a remote hub for remotely communicating with the vehicle, where the remote hub has a communications interface for supplying the communications signal to the signal injector. The system can further include a signal cable for connecting the communications interface to the termination and traversing the distance from the remote hub to the termination to isolate the power supply from the communications interface.

## Description

### CROSS-REFERENCE TO RELATED APPLICATIONS

The present application claims the benefit under 35 U.S.C. §119(e) of U.S. Provisional Application Serial No. 63/743,003, filed January 8, 2025, and titled "ENERGY TRANSMISSION AND COMMUNICATIONS SYSTEM WITH REMOTE COMMUNICATIONS INTERFACE," which is herein incorporated by reference in its entirety.

### BACKGROUND

Conductors can be used to transmit electrical energy to vehicles that move along the conductors.

### SUMMARY

An energy transmission and communications system can include a power supply to supply electrical energy, and a conductor to electrically couple to the power supply to transmit the electrical energy from the power supply. The energy transmission and communications system can also include a vehicle to electrically couple to the conductor to receive the electrical energy supplied from the power supply, where the vehicle is configured to travel along the conductor and receive the electrical energy from the power supply as part of an electrical circuit established between the power supply and the vehicle through the conductor. The energy transmission and communications system can further include a signal injector to introduce a communications signal to the conductor for receipt by the vehicle, and a termination at a first end and/or a second end of the conductor for at least lessening reflection of the communications signal at the first end and/or the second end of the conductor.

The energy transmission and communications system can also include a remote hub for remotely communicating with the vehicle, where the remote hub has a communications interface for supplying the communications signal to the signal injector. In embodiments of the disclosure, the remote hub is spaced apart from the power supply at a distance. The energy transmission and communications system can further include a signal cable for connecting the communications interface to the termination and traversing the distance from the remote hub to the termination. In this manner, the power supply can be isolated from the communications interface.

A signal injector for an energy transmission and communications system can be configured to be installed at one or both ends of a conductor. The signal injector can include a first jumper connected to power lines, where the first jumper is for connecting to a power bus cable electrically coupled to a power supply. The power bus cable can include phase wires, where the power lines are configured to connect to the phase wires. The signal injector can also include at least a second jumper connected to signal lines, where the second jumper is for connecting to a signal cable electrically coupled to a remote hub. The remote hub is spaced apart from the power supply at a distance, and the signal cable can include signal wires, where the signal lines are configured to connect to the signal wires. The signal injector can further include a coupling including at least a first set of coupling capacitors, where the first set of coupling capacitors is configured to couple a signal received from the signal cable to the power bus cable and restrict electric power in the power bus cable from reaching the remote hub. The signal injector can also include a resistor/capacitor (RC) unit configured to connect to a ground, where the RC unit is connected to at least one of the signal lines, and where the RC unit is configured to reduce signal loss and maintain ground potential on the signal lines.

A termination/signal injector for an energy transmission and communications system can be configured to be installed at one or both ends of a conductor. The termination/signal injector can include a first jumper connected to a first power line, a second power line, a third power line, and a protective earth line, where the first jumper is for connecting to a power bus cable electrically coupled to a power supply. The power bus cable can include a first phase wire, a second phase wire, a third phase wire, and a protective earth ground wire, where the first power line is configured to connect to the first phase wire, the second power line is configured to connect to the second phase wire, the third power line is configured to connect to the third phase wire, and the protective earth line is configured to connect to the protective earth ground wire.

The termination/signal injector can also include at least a second jumper connected to a first signal line, a second signal line, and a third signal line, where the second jumper is for connecting to a signal cable electrically coupled to a remote hub. The remote hub can be spaced apart from the power supply at a distance, and the signal cable can include a first signal wire, a second signal wire, and a third signal wire. The first signal line is configured to connect to the first signal wire, the second signal line is configured to connect to the second signal wire, and the third signal line is configured to connect to the third signal wire. In some embodiments, the signal cable also includes a ground connection (e.g., a wire for connecting to a protective earth ground, a shield conductor, and so forth). The second jumper can also be configured to connect the ground connection to a ground.

The termination/signal injector can further include a coupling including a first set of coupling capacitors, a second set of coupling capacitors, and a third set of coupling capacitors, where the first set of coupling capacitors has a first capacitor in parallel with a second capacitor connected between the first signal line and the first power line, the second set of capacitors has a third capacitor in parallel with a fourth capacitor connected between the second signal line and the second power line, and the third set of capacitors has a fifth capacitor in parallel with a sixth capacitor connected between the third signal line and the third power line. The first, second, and third sets of capacitors are configured to couple a signal received from the signal cable to the power bus cable and restrict electric power in the power bus cable from reaching the remote hub.

The termination/signal injector can also include a resistor/capacitor (RC) unit including a shunt resistor and a seventh capacitor configured to connect to a ground, where the RC unit is connected to at least one of the first, second, or third signal lines, and where the RC unit is configured to reduce signal loss and maintain ground potential on the first, second, and third signal lines. The termination/signal injector can further include a termination unit having a termination impedance, where the termination unit includes resistors between the first signal line, the second signal line, and the third signal line.

### DRAWINGS

The Detailed Description is described with reference to the accompanying figures. The use of the same reference numbers in different instances in the description and the figures may indicate similar or identical items.
FIG. 1 is a diagrammatic illustration of termination/signal injector topology for an energy transmission and control system, where conductor rails are daisy-chained together in accordance with example embodiments of the present disclosure.
FIG. 2 is another diagrammatic illustration of termination/signal injector topology for an energy transmission and control system in accordance with example embodiments of the present disclosure.
FIG. 3 is a diagrammatic illustration of conductors for an energy transmission and control system, such as the energy transmission and control systems illustrated in FIGS. 1 and 2, in accordance with example embodiments of the present disclosure.
FIG. 4 is a diagrammatic illustration of a vehicle for an energy transmission and control system, such as the energy transmission and control systems illustrated in FIGS. 1 and 2, in accordance with example embodiments of the present disclosure.
FIG. 5 is a diagrammatic illustration of vehicles for an energy transmission and control system, such as the energy transmission and control systems illustrated in FIGS. 1 and 2, in accordance with example embodiments of the present disclosure.
FIG. 6 is a circuit schematic illustrating a termination/signal injector for an energy transmission and control system, such as the energy transmission and control systems illustrated in FIGS. 1 and 2, in accordance with example embodiments of the present disclosure.
FIG. 7 is an illustration of a termination box with a power cable for bus connection in an energy transmission and control system in accordance with example embodiments of the present disclosure.

### DETAILED DESCRIPTION

Aspects of the disclosure are described more fully hereinafter with reference to the accompanying drawings, which form a part hereof, and which show, by way of illustration, example features. The features can, however, be embodied in many different forms and should not be construed as limited to the combinations set forth herein; rather, these combinations are provided so that this disclosure will be thorough and complete, and will fully convey the scope. The following detailed description is, therefore, not to be taken in a limiting sense.

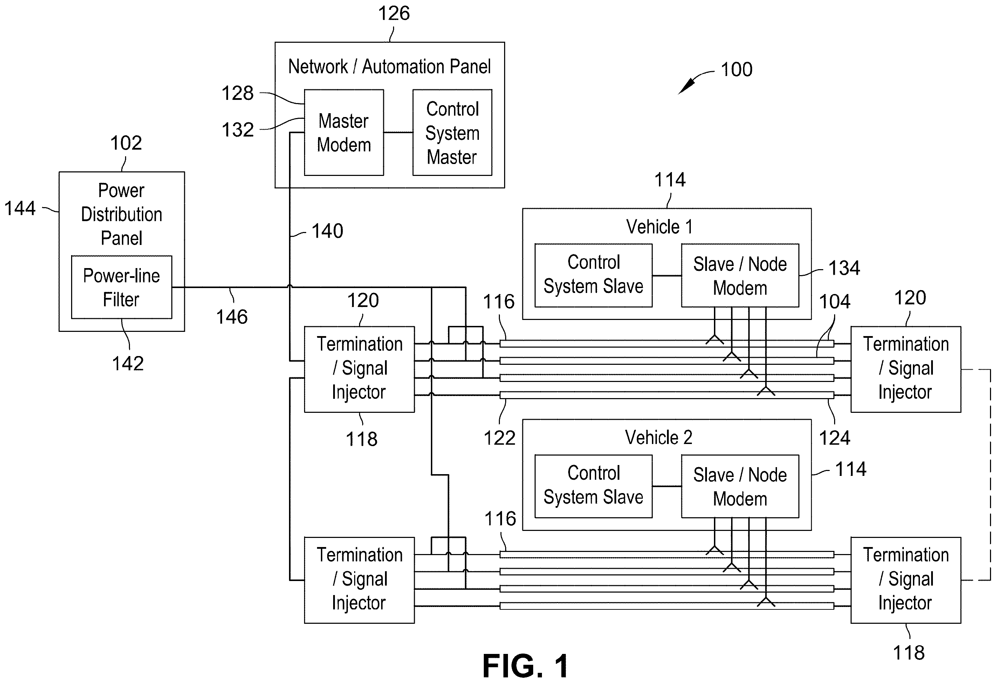

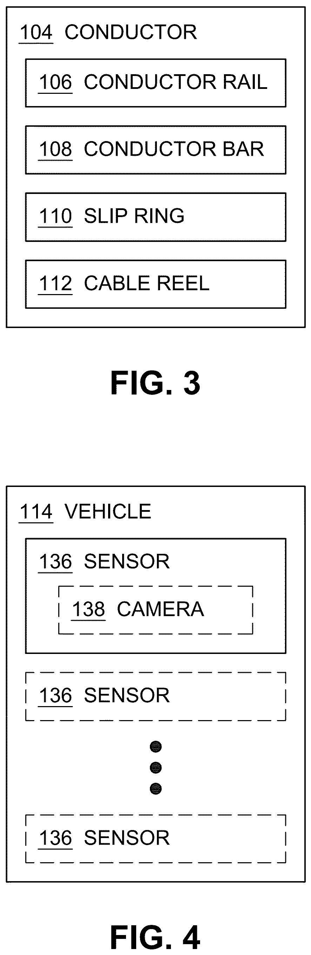

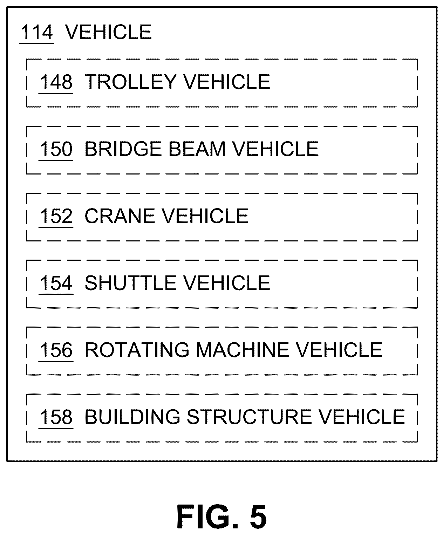

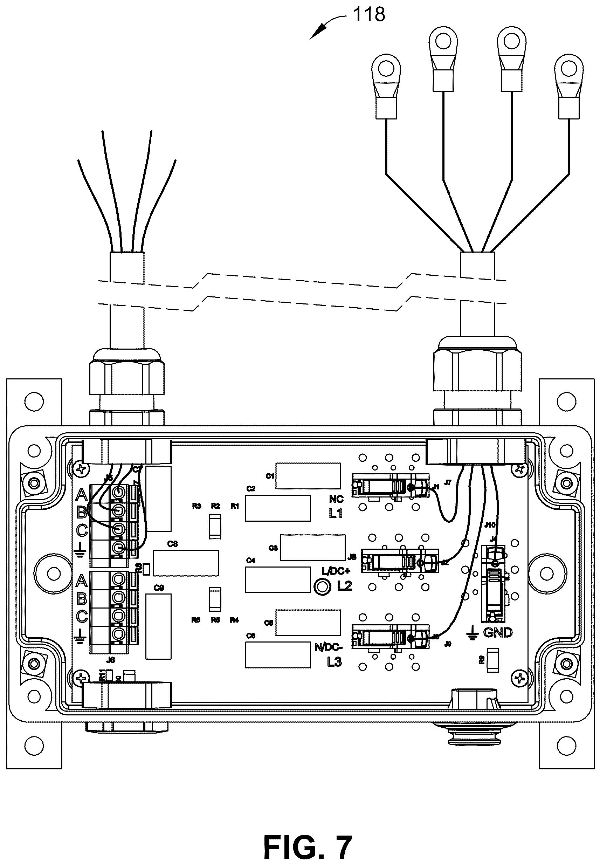

Referring generally to FIGS. 1 through 7, energy transmission and communications systems 100 are described. The energy transmission and communications systems 100 can facilitate operation within a control system using multiple modems (e.g., a master modem and one or more slave modems). For example, a master modem transmits a communications signal through a signal cable that is electrically connected to a jumper. Signal lines carry the communication signal from the jumper to a first set, a second set, and/or a third set of coupling capacitors. The communications signal is a high frequency signal that passes through the set(s) of capacitors and is introduced to power lines. The power lines are connected to another jumper that is further electrically connected to a power bus cable. At this point, the communications signal is introduced to the power bus cable and transmitted to one or more vehicles via a conductor (e.g., a rail or another electrical conductor).

A slave modem can be included with a vehicle traveling on a conductor (e.g., a rail). The vehicle is able to receive both electrical power and communications from the conductor. The slave modem receives and translates the communications signal to, for example, Ethernet data. The slave modem can also convert Ethernet data into another communications signal that is to be transmitted to the master modem. This communications signal is carried by the power bus cable from the vehicle to a jumper. The communications signal is then carried by the power lines from the jumper to the coupling capacitors. The coupling capacitors block the low frequency signals associated with the electric power from the power supply. Only the communications signal from the slave modem (high frequency signal) passes through the capacitors and to the signal lines. Another jumper receives the communications signal from the slave modem. The communications signal is then transmitted to the master modem via the conductor.

As described, an energy transmission and communications system 100 includes a power supply 102 to supply electrical energy. In embodiments of the disclosure, the power supply 102 can be configured as an energy storage device (e.g., a battery, a fuel cell), an electromechanical system (e.g., a generator, an alternator, a convertor, etc.), alternating current (AC) mains, and/or another type of power supply. The energy transmission and communications system 100 also includes conductors 104 to electrically couple to the power supply 102 to transmit the electrical energy from the power supply 102. As described, a conductor 104 can be configured as a conductor rail 106, a conductor bar 108, a slip ring 110, a cable reel 112, and so forth. In some embodiments, the conductor 104 can be configured as a cable with a reduced number of conductors (e.g., a conductor wire carrying both electrical power and communications signals).

In embodiments of the disclosure, the conductor 104 provides electrical power to mobile equipment, such as one or more vehicles 114 electrically coupled with the conductor 104. For example, the energy transmission and communications system 100 further includes a vehicle 114 to electrically couple to a conductor 104 to receive the electrical energy supplied from the power supply 102. In embodiments of the disclosure, the vehicle 114 is configured to travel along the conductor 104 and receive the electrical energy from the power supply 102 as part of an electrical circuit established between the power supply 102 and the vehicle 114 through the conductor 104. The systems, techniques, and apparatus described herein can be used in various applications, including, but not necessarily limited to, applications that would otherwise require festoons and/or other cables to connect vehicle components to control hardware, such as overhead cranes, electric suspension railways, automatically controlled industrial trucks, automated warehouse robots, dark rides, and so forth.

In some embodiments, a conductor 104 is used to deliver electrical power to a vehicle 114 through conductive material forming a conductive support 116 (e.g., steel rail or another conductive support material). For example, a conductive support 116 is configured to support the vehicle 114 for travel along the conductive support 116 and to transmit electrical energy from the power supply 102 to the vehicle 114 along the conductive support 116 as part of an electrical circuit established between the power supply 102 and the vehicle 114 through the conductive support 116. For instance, a vehicle 114 can include wheels, skids, and/or other mechanisms for translating along the conductive support 116. The vehicle 114 can also include a translating contact, e.g., a sliding collector shoe, a rolling collector, or another collector for electrically coupling the vehicle 114 to the conductive support 116 by riding along in contact with the conductive support 116.

In some embodiments, a conductive support 116 can support a vehicle 114 for travel upon the conductive support 116 (e.g., mechanically supporting a vehicle 114 on a rail). In some embodiments, a vehicle 114 travels along a conductive support 116, but is not necessarily mechanically supported by the conductive support 116. In some embodiments, the translating contact may be in direct physical contact with the conductive support 116, and the vehicle 114 may be electrically coupled with the conductive support 116 through the physical contact between the translating contact and the conductive support 116. However, in other embodiments, a translating contact does not necessarily contact a conductive support 116, and a vehicle 114 can be coupled with the conductive support 116 without direct physical contact (e.g., using capacitive coupling, inductive coupling, electromagnetic (EM) wave coupling, such as radio frequency (RF) coupling using an antenna mounted to the vehicle 114, and/or other bidirectional electrical signal propagation techniques).

For the purposes of the present disclosure, the term "vehicle" shall be understood to refer to any equipment that moves with respect to its connection to a conductor 104. For example, in the case of a robot arm, the robot arm vehicle travels along a rail configured as a conductive support 116. In another example, a crane vehicle travels along a conductive support 116, and the connection between the conductive support rail and the crane may be used to replace, for example, a festoon. In a further example, a rotary pallet table vehicle on a transfer manufacturing machine supports multiple workpieces for machining at different stations (e.g., for drilling operations). The rotary pallet table vehicle travels along a conductive support 116 that remains stationary while a rotating structure connected to the table vehicle moves the table along and around the stationary support structure at a center pivot location. Together, the rotating structure connected to the table and the stationary structure of the conductive support form a slip ring 110, which allows power and electrical signals to be transmitted between the stationary structure and the rotating structure. As described herein, the slip ring 110 can be mounted above or beneath the table to provide power and control signals to work holdings mounted to the table. An energy transmission and communications system 100 may be used to reduce the number of data signal circuits that would otherwise be used in a slip ring 110 in a typical system. For example, communications signals may be sent over power circuits used to power motors and/or work holding devices.

In another example, a transfer machine includes a heated rolling lamination drum vehicle. The drum vehicle travels along a conductive support 116 that remains stationary while a rotor connected to the drum vehicle moves the drum along and around a conductive support bearing at a pivot. Together, the rotor connected to the drum and the stationary bearing structure of the conductive support form a slip ring 110. The slip ring 110 can provide current for heaters in the drum, and data signal circuits for thermocouple measurements. As described herein, an energy transmission and communications system 100 can reduce the number of conductors that would otherwise be used in a slip ring in a typical system (e.g., by removing data signal circuits). For instance, communications signals may be sent over the power circuits used for the heating elements. In another example, a center pivot irrigation vehicle can be connected to a conductive support structure (e.g., at a slip ring 110) for transmitting power and communications signals between the center pivot structure and the irrigation equipment. In a further example, a mobile robotics platform is connected to a cable reel vehicle, where a drum of the cable reel vehicle travels along a conductive support 116 that remains stationary while a rotating structure connected to the drum moves along and around a conductive support bearing structure at a pivot. In some embodiments, a mobile platform vehicle may also travel along a conductive support 116 configured as a cable that remains stationary with respect to the platform, and power and communications signals may be transmitted between the stationary cable and the mobile platform (e.g., using capacitive coupling, inductive coupling, EM wave coupling, such as RF coupling using an antenna mounted to the vehicle 114, and/or other bidirectional electrical signal propagation techniques).

An energy transmission and communications system 100 includes a signal injector 118 to introduce a communications signal to a conductor 104 for receipt by the vehicle 114. The energy transmission and communications system 100 also includes a termination 120 at a first end 122 of the conductor 104 for at least lessening reflection of the communications signal at the first end 122 of the conductor 104. In some embodiments, the termination 120 is also simultaneously at a second end 124 of the conductor 104 for at least lessening reflection of the communications signal at the second end 124 of the conductor 104. As described, a termination 120 can be an electrical resistor and/or another electrical termination. In some embodiments, the signal injector 118 and the termination 120 can be electrically connected using a single circuit board (e.g., a termination/signal injector 118) that can be housed in a compact junction box sized for receiving the circuit board and associated cable connections.

The energy transmission and communications system 100 also includes a remote hub 126 for remotely communicating with the vehicle 114, where the remote hub 126 is spaced apart from the power supply 102 at a distance. The remote hub 126 includes a communications interface 128 for supplying the communications signal to the signal injector 118. As described herein, the communications interface 128 can be positioned in a control cabinet, avoiding difficult power cable routing. For example, adding to and/or modifying a power cable path can be costly and may introduce signal quality and noise issues due to the noise inherent in power cables. In some embodiments, the remote hub 126 can control the vehicle 114. For example, the remote hub 126 includes a digital control system 130 (e.g., a programmable logic controller (PLC)) or computer for controlling the vehicle 114.

In some embodiments, the communications interface 128 can implemented by a modem 132. As described, a modem 132 can be configured as a hardware device that uses a Gigabit Home Networking (G.hn) physical interface as a bridge between two Ethernet nodes in a network, e.g., between the remote hub 126 and the vehicle 114. The modem 132 can be connected to the digital control system 130/control system master using an Ethernet cable. In some embodiments, the vehicle 114 can also include a communications interface (e.g., another modem 134) that uses G.hn and/or another networking protocol, where the modems 132 and 134 send and receive translated Ethernet data back and forth. In some embodiments, the modems 132 and/or 134 can implemented using PLCs. In some embodiments, the vehicle 114 can include one or more sensors 136 (e.g., cameras 138) and/or other communication devices, which can be connected to the modem 134 on the vehicle 114. In some embodiments, multiple remote modems 134 (e.g., on separate vehicles 114 coupled to conductors 104) can communicate with a single master modem 132 (e.g., at the remote hub 126 or another static location some distance from the from the power supply 102). In this manner, an energy transmission and communications system 100 can implement various control and/or data systems, e.g., utilizing Ethernet across a communication bridge.

As described, G.hn signaling can utilize a broadband Orthogonal Frequency-Division Multiplexing (OFDM)-modulated sub-carrier transmission scheme, which spreads transmitted data across four thousand and ninety-six (4,096) sub-carriers in a wide frequency band. The frequency band can be adjusted (e.g., by adjusting the maximum frequency) to an industry-standard for power lines of between about two megahertz (2 MHz) and about fifty megahertz (50 MHz). For example, in some embodiments, all 4096 sub-carriers are used within a power-line-specific band of 2-50 MHz. However, a maximum frequency of fifty megahertz (50 MHz) is provided by way of example and is not meant to limit the disclosure. In some embodiments, a maximum frequency of less than 50 MHz can be used (e.g., a maximum frequency of 25 MHz, 26 MHz, 27 MHz, 28 MHz, 29 MHz, 30 MHz, 31 MHz, 32 MHz, 33 MHz, 34 MHz, 35 MHz, 36 MHz, 37 MHz, 38 MHz, 39 MHz, 40 MHz, 41 MHz, 42 MHz, 43 MHz, 44 MHz, 45 MHz, 46 MHz, 47 MHz, 48 MHz, 49 MHz, etc.). A maximum frequency of more than fifty megahertz can also be used in some embodiments, e.g., a maximum frequency of up to about eighty megahertz (80 MHz).

The energy transmission and communications system 100 further includes one or more signal cables 140 for connecting the communications interface 128 to the termination 120 and traversing the distance from the remote hub 126 to the termination 120 so that the power supply 102 is isolated from the communications interface 128. In some embodiments, a signal cable 140 can have multiple wires (e.g., two (2) wires, three (3) wires, etc.) depending upon the number of power conductors 104 in a particular site or application's power system. In some embodiments, the signal cable 140 can be unshielded to improve impedance (e.g., providing higher impedance). Large conductor size signal cables (i.e., cables having large cross-sectional areas) may be used to reduce signal loss. In some embodiments, a signal cable 140 can use sixteen (16) American wire gauge (AWG) wire or wire with a cross-sectional area of about one and one-half millimeter-squared (1.5 mm²). However, these wire sizes are provided by way of example and are not meant to limit the disclosure. In other embodiments, a signal cable 140 can use twenty (20) AWG cable, twenty-two (22) AWG cable, and so forth.

The signal cables 140 can be low-loss signal cables, e.g., having low-loss insulation. For example, to provide sufficient signal power through a signal cable 140 for signal injection, insulation material can be used on the signal wires. In some embodiments, a signal cable 140 can use polyethylene-based cable insulation for low power loss, such as high-density polyethylene (HDP). In another example, a PVC blend provides a desirable low cost and intermediate power loss solution for a signal cable 140. In some embodiments a signal cable 140 has a signal loss of about six decibels per one hundred feet (6 dB/100 ft) and a range of about six hundred feet (600 ft) or one hundred and eighty meters (180 m). However, these signal cable characteristics are provided by way of example and are not meant to limit the present disclosure. In other examples, signal cables having different loss and/or range characteristics can be used.

The energy transmission and communications system 100 can also include a power line filter 142, e.g., at a power distribution panel 144 spaced apart from the remote hub 126. The power line filter 142 can be connected between the power supply 102 and the conductor(s) 104. The power supply 102 can be connected to a conductor 104 by a power bus cable 146. As shown and described, reduced loss from the signal injector 118 improves signal power, as the signal cable 140 bypasses the high-loss power cable pathway. Accordingly, the systems, techniques, and apparatus described herein provide improved signal quality, with the signal cable pathway providing improved signal-to-noise ratio compared to a typical power cable arrangement, and higher data throughput and/or reliability.

With reference to FIG. 1, in some examples, multiple conductors 104 can be daisy-chained together, with terminations/signal injectors 118 at each one of the conductors 104. In some examples, a back-side signal cable jumper can be used in an energy transmission and communications system 100, e.g., in place of a signal cable jumper which would otherwise by supplied to the power feed end of the conductor 104. The back-side signal cable jumper can be implemented using another signal cable 140. It should also be noted that a power feed may be placed anywhere on a conductor 104, e.g., in the middle of a conductor rail 106 to reduce voltage drop. Thus, various combinations of power feed and signal injection locations can be used. It should also be noted that the terminations/signal injectors 118 may also be placed anywhere on the conductor 104.

In some embodiments, the conductors 104 are configured as conductor bars 108 included with a crane assembly. For example, a ship-to-shore (STS) port crane may have conductor bars 108 that transfer power and data from a boom structure to a vehicle configured as a mobile trolley vehicle 148 riding along the boom structure, e.g., where the trolley vehicle 148 includes a cabin and a hoist. In embodiments, a port crane can implement an energy transmission and communications system 100, where a conductor bar 108 is coupled with a termination/signal injector 118.

In another example, a material-handling overhead crane may have conductor bars 108 that transfer power and data from a static frame (e.g., support beams) attached to a building structure to a vehicle configured as a mobile bridge beam vehicle 150 that rides along the frame/support beams. In embodiments, an overhead crane can implement an energy transmission and communications system 100, where a conductor bar 108 is coupled with a termination/signal injector 118. However, it should be noted that STS port cranes and overhead cranes are provided by way of example and are not meant to limit the present disclosure. In other examples, the systems, techniques, and apparatus described herein can be used with other various energy transmission and communications systems 100.

In some embodiments, a stacker crane can be used in a warehouse setting, where the stacker crane traverses warehouse isles, typically between about one hundred feet (100 ft) and about five hundred feet (500 ft) in length. In these examples, the stacker crane may have a vertical lifting axis handling height extending between about twenty feet (20 ft) and about fifty feet (50 ft) in height. The stacker crane may have conductor bars 108 for power transfer from guide rails on the floor to a crane vehicle 152. In some embodiments, a stacker crane uses three-phase AC at a voltage ranging from about four hundred volts AC (400 VAC) to about six hundred volts AC (600 VAC). In embodiments, a stacker crane can implement an energy transmission and communications system 100, where a conductor bar 108 is coupled with a termination/signal injector 118.

In some embodiments, a pallet shuttle can be used in a warehouse setting, where the pallet shuttle traverses warehouse isles. In these examples, a pallet shuttle may use conductor bars 108 for power transfer from guide rails to a shuttle vehicle 154, e.g., in the manner of the stacker cranes previously described. As described, a conductor bar 108 spans the length/depth of an aisle but may have lower amperage and power requirements for a more compact arrangement than a stacker crane, e.g., serving a single vertical level. In some embodiments, a pallet shuttle uses a DC rail system operating at a comparatively lower voltage due to reduced power requirements (e.g., for a smaller package handling shuttle vehicle 154), while in other embodiments a pallet shuttle uses a three-phase AC rail system. In embodiments, a pallet shuttle can implement an energy transmission and communications system 100, where a conductor bar 108 is coupled with a termination/signal injector 118.

In some embodiments, a very large diameter slip ring 110 can be fabricated using conductor bars (e.g., instead of solid conductor rings). For example, a conductor bar slip ring 110 can have a diameter ranging from about four feet (4 ft) to more than about one hundred feet (100 ft) depending upon the allowed bend radius of the bar. Such slip rings 110 can be used in a wide range of applications for large rotating machine vehicles 156, building structure vehicles 158, and so forth. For example, a very large diameter slip ring 110 can be used for a turret-style housing in a large space telescope. In some examples, a very large slip ring configuration may implement a termination function. In other examples, a very large slip ring configuration does not necessarily implement a termination function. In embodiments, a slip ring 110 can implement an energy transmission and communications system 100, where a conductor bar is coupled with a termination/signal injector 118.

It should be noted that while conductors 104 configured as conductor bars have been described with some specificity, the systems, techniques, and apparatus of the present disclosure can implement various energy transmission and communications systems 100 using conductors other than conductor bars. For example, cable reels 112 can be used in power and data transmission assemblies in a wide range of applications. In some embodiments, single-axis vertical motion can be implemented with cable reels 112 in applications including, but not necessarily limited to, crane hoist systems that provide power and data from the crane trolley/cabin to a clamping/retention mechanism, which provides a clamping/grabbing function, and is suspended by hoist cables. For example, a cable reel crane hoist configuration can be used in a coil grabbing application for material handling (e.g., steel). In another example, a cable reel crane hoist configuration can be used in a spreader device for STS cranes, e.g., for attaching to shipping containers.

For cable reel applications, the implementations and functions of signal injectors 118 can be similar to the implementations and functions previously described for conductor rails, but these implementations do not necessarily include a termination function (e.g., resulting in reduced topology). In some examples, a signal injector 118 has circuitry configured for low signal loss via higher shunt resistor values on the circuit board. The signal injector 118 circuitry can be located relatively close to the cable reel 112, e.g., with a short feed cable to maximize signal strength and quality compared to using a longer run power cable back to an automation cabinet (e.g., between about thirty feet (30 ft) and about one hundred feet (100 ft) in some instances). It should be noted that while the absence of a termination function has been described for cable reel applications with some specificity, other applications described herein may also employ higher loss shunt resistor values.

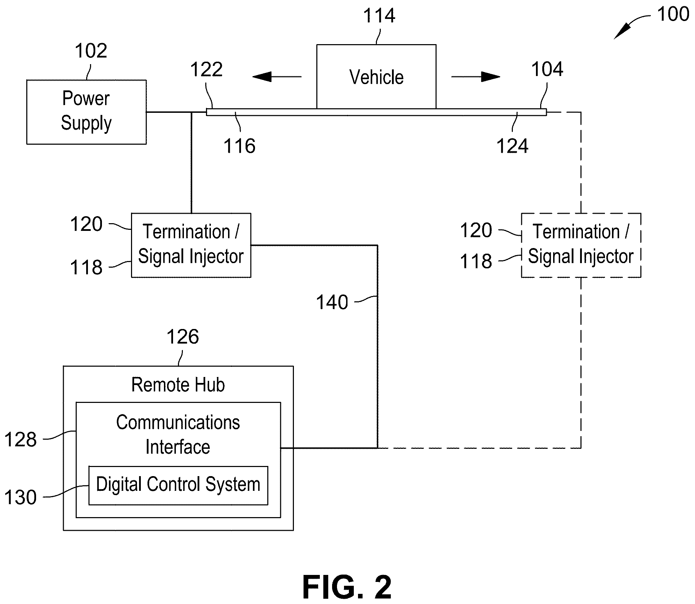

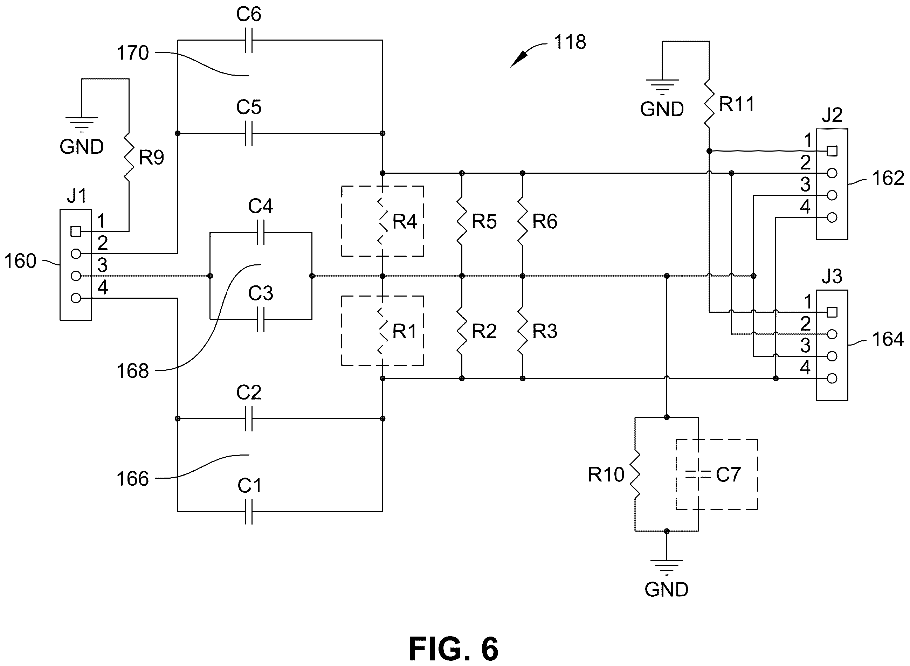

A termination/signal injector 118 for an energy transmission and communications system 100 can be installed at one or both of the first and second ends 122, 124 of a conductor 104. With reference to FIG. 6, the termination/signal injector 118 can include a first jumper 160 for connecting to a power bus cable 146 of the conductor 104, where the power bus cable 146 is electrically coupled to a power supply 102 (e.g., as described with reference to FIGS. 1 and 2). The first jumper 160 is connected to a first power line, a second power line, a third power line, and a protective earth line. The power bus cable 146 includes a first phase wire, a second phase wire, a third phase wire, and a protective earth ground wire. As described, the first power line is configured to connect to the first phase wire, the second power line is configured to connect to the second phase wire, the third power line is configured to connect to the third phase wire, and the protective earth line is configured to connect to the protective earth ground wire.

For example, the energy transmission and communications system 100 can be a three-phase alternating current (AC) system (e.g., operating at between about 400-600 VAC at a frequency of about 50 Hz or 60 Hz). In this example, the power bus cable 146 includes three-phase poles (e.g., one wire for each phase) and a fourth pole (e.g., a ground wire), which is a protective earth (PE) ground conductor. As shown in FIG. 6, the first jumper 160 includes one or more pass-through terminals for electrically connecting the three phase wires and the PE wire to the termination/signal injector 118. The first jumper 160 also includes a first power line, a second power line, a third power line, and a PE line. The PE line is connected between the pass-through terminal that receives the fourth PE wire and a resistor R9 further connected in series with a ground. In some embodiments, the resistor R9 can have a power rating of about one watt (1 W).

In embodiments, the termination/signal injector 118 also includes at least a second jumper 162. The second jumper 162 is connected to a first signal line, a second signal line, and a third signal line. In some embodiments, the termination/signal injector 118 can include additional jumpers (e.g., a third jumper 164, a fourth jumper, etc.). For instance, as shown in FIG. 6, the termination/signal injector 118 can include the second and third jumpers 162 and 164. The second jumper 162 is configured to be electrically connected to the signal cable 140, which is electrically coupled to the remote hub 126. The third jumper 164 is configured to receive the back-side signal cable jumper described above. The third jumper 164 allows daisy-chaining of multiple terminations/signal injectors 118. Each one of the second and third jumpers 162 and 164 can include one or more pass-through terminals.

In some embodiments, the signal cable 140 includes three signal wires, e.g., a first signal wire, a second signal wire, and a third signal wire, where the first signal line is configured to connect to the first signal wire, the second signal line is configured to connect to the second signal wire, and the third signal line is configured to connect to the third signal wire. For example, the pass-through terminals of the second jumper 162 are configured to electrically connect the three signal wires to the termination/signal injector 118. The back-side signal cable can also include three signal wires. Each one of the second and third jumpers 162 and 164 also includes a signal line connected to each pass-through terminal. Each signal line from the second and third jumpers 162 and 164 also includes a first signal line, a second signal line, a third signal line, a fourth ground line. The ground line is connected to a resistor that is in series with a ground. As described, the signal cable 140 does not necessarily include a PE wire and can allow for an optional cable shield connection from the integrated cable drain wire to the fourth ground line.

The termination/signal injector 118 also includes a signal injector coupling, as shown in FIG. 6. The signal injector 118 uses capacitance coupling and/or capacitance isolation techniques to introduce a communication signal to the conductor 104, and/or to receive communications signals from the conductor 104. The capacitive coupling technique can include at least one capacitor connected between a power line and a signal line. For instance, the coupling includes a first set of coupling capacitors 166, a second set of coupling capacitors 168, and a third set of coupling capacitors 170. The first set of coupling capacitors 166 includes a first capacitor C1 in parallel with a second capacitor C2. The first set of coupling capacitors 166 is connected between the first signal line and the first power line. The second set of coupling capacitors 168 includes a third capacitor C3 in parallel with a fourth capacitor C4. The second set of coupling capacitors 168 is connected between the second signal line and the second power line. The third set of coupling capacitors 170 includes a fifth coupling capacitor C5 in parallel with a sixth coupling capacitor C6. The third set of coupling capacitors 170 is connected between the third signal line and the third power line. In some embodiments, the capacitors C1, C2, C3, C4, C5, and C6 can each have a voltage rating of about four hundred volts AC (400 VAC) and a farad rating of about four and seven-tenths of a nanofarad (4.7 nF).

In this manner, the first, second, and third sets of coupling capacitors 166, 168, and 170 are configured to couple a communications signal received from the signal cable 140 to the power bus cable 146 and restrict electric power in the power bus cable 146 from reaching the remote hub 126. Generally, capacitors have a high impedance to low frequency signals and a low impedance to high frequency signals. Thus, low frequency signals are blocked from going through and high frequency signals are passed through easily. Referring again to FIG. 6, the first set of coupling capacitors 166, the second set of coupling capacitors 168, and the third set of coupling capacitors 170 can restrict the voltage and electric power transmitted in the power bus cable 146 from reaching the master modem 132, e.g., with minimal signal loss.

In some embodiments, at least one signal line is connected to a resistor/capacitor (RC) unit to reduce signal loss. The RC unit can include a shunt resistor and a seventh capacitor configured to connect to a ground. The RC unit can be connected to at least one of the first, second, or third signal lines, where the RC unit is configured to reduce signal loss and maintain ground potential on the first, second, and third signal lines. For example, as shown in FIG. 6, the RC unit can include a shunt resistor R10 and a capacitor C7. In some embodiments, the shunt resistor R10 can have a power rating of about two watts (2W). Another signal line can also be connected to a resistor R11 having a power rating of about two hundred and fifty microwatts (250 mW). However, it should be noted that a resistor/capacitor unit is described by way of example and is not meant to limit the present disclosure. In other embodiments, the respective signal lines are connected to the resistors R10 and R11 without the capacitor C7.

Referring again to FIG. 6, in some embodiments, the termination/signal injector 118 also includes a termination unit, where the termination unit has a termination impedance and includes resistors between the first signal line, the second signal line, and the third signal line. As described, the termination unit can include at least one resistor. As shown in FIG. 6, the resistors R2, R3, R5, and R6 set the termination impedance. In an example, the effective termination impedance can be between about fifty (50) and three hundred (300) ohms. The resistors R2, R3, R5, and R6 terminate the communication signal and/or lessen reflection of the communication signal. More specifically, R5 and R6 can be connected in parallel between the first signal line and the second signal line, and R2 and R3 can be connected in parallel between the second signal line and the third signal line. In some embodiments, additional resistors R1 and R4 can also be connected between the first, second, and/or third signal lines. In some embodiments, each of the resistors R2, R3, R5, and R6 can have a power rating of about two watts (2 W).

In some embodiments, the termination/signal injector 118 can function solely as a signal injector. As described, the termination/signal injector 118 will not necessarily terminate power bus cables 146 or conductor bars 108. For example, there may not be a dead-end open conductor on a dynamic rail/bar system. In some embodiments, the resistance value for shunt resistor R10 can be between about nine hundred (900) and eleven thousand (11k) ohms for minimal signal loss while maintaining ground potential on the signal lines. In operation, the RC unit can redirect noise to ground before the undesired signal reaches the second and third jumpers 162 and 164. In some embodiments, the termination unit can be used without the signal injection unit, e.g., by increasing the resistance of the shunt resistor as described.

The power bus cable 146 discussed with the terminal/signal injector 118 in FIG. 6 has been described as a three-phase AC power system topology. In some embodiments, the power system topology is a single-phase AC system (100-350 VAC). The power bus cable 146 includes a phase wire, a neutral wire, and a PE wire. The phase wire and the neutral wire are connected to the first power line and the second power line, respectively. The PE wire is further connected to the PE line and the third power line is left open. In other embodiments, the power system topology is a direct current (DC) system (12-400VDC). The power bus cable 146 includes a positive wire, a negative wire, and a PE wire. The positive wire is connected to the first power line, and the negative wire is connected to the second power line. The PE wire is further connected to the PE line and the third power line is left open. Additionally, because only two power lines are used to transmit the communications signal, only two signal lines can be used to carry the signal. In some embodiments, the power bus cable 146 can carry three pole DC power.

In operation, the master modem 132 transmits a communications signal through the signal cable 140 that is electrically connected to the second jumper 162. The signal lines carry the communication signal from the second jumper 162 to the first set, second set, and/or third set of coupling capacitors. Because the communications signal is a high frequency signal, the communication signal passes through the set(s) of capacitors and is introduced to the power lines. The power lines are connected to the first jumper 160 that is further electrically connected to the power bus cable 146. At this point, the communication signal is introduced to the power bus cable 146 and transmitted to one or more vehicles 114. A slave modem 134 can be included with a vehicle 114 traveling on the rail. The vehicle 114 is able to receive both electrical power and the communications signal from the conductor 104. The slave modem 134 receives and translates the communications signal to, for example, Ethernet data. The slave modem 134 can also convert Ethernet data into a second communications signal that is to be transmitted to the master modem 132. The second communications signal is carried by the power bus cable 146 from the vehicle 114 to the first jumper 160. The second communications signal is then carried by the power lines from first jumper 160 to the coupling capacitors. The coupling capacitors block the low frequency signals associated with the electric power from the power supply 102. Only the second communications signal (high frequency signal) passes through the capacitors and to the signal lines. The second jumper 162 receives the second communications signal that is introduced to the signal cable 140. The second communications signal is then transmitted to the master modem 132.

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

## Claims

1. An energy transmission and communications system, comprising:
a power supply to supply electrical energy;
a conductor to electrically couple to the power supply to transmit the electrical energy from the power supply;
a vehicle to electrically couple to the conductor to receive the electrical energy supplied from the power supply, the vehicle configured to travel along the conductor and receive the electrical energy from the power supply as part of an electrical circuit established between the power supply and the vehicle through the conductor;
a signal injector to introduce a communications signal to the conductor for receipt by the vehicle;
a termination at a first end of the conductor for at least lessening reflection of the communications signal at the first end of the conductor;
a remote hub for remotely communicating with the vehicle, the remote hub including a communications interface for supplying the communications signal to the signal injector, the remote hub spaced apart from the power supply at a distance; and
a signal cable for connecting the communications interface to the termination and traversing the distance from the remote hub to the termination so that the power supply is isolated from the communications interface.

2. The energy transmission and communications system as recited in claim 1, wherein the termination is also at a second end of the conductor opposite the first end of the conductor.

3. The energy transmission and communications system as recited in claim 1, wherein the signal injector includes at least one signal line connected to the signal cable and a resistor/capacitor (RC) unit including a shunt resistor and a capacitor configured to connect to a ground, wherein the RC unit is configured to reduce signal loss and maintain ground potential on the at least one signal line.

4. The energy transmission and communications system as recited in claim 1, wherein the conductor comprises a conductor bar.

5. The energy transmission and communications system as recited in claim 1, wherein the vehicle comprises at least one of a trolley vehicle, a bridge beam vehicle, a crane vehicle, a shuttle vehicle, a rotating machine vehicle, or a building structure vehicle.

6. The energy transmission and communications system as recited in claim 1, wherein the termination comprises at least one electrical resistor.

7. The energy transmission and communications system as recited in claim 1, wherein the remote hub comprises a digital control system for controlling the vehicle.

8. The energy transmission and communications system as recited in claim 1, wherein the communications interface comprises a modem.

9. A termination/signal injector for an energy transmission and communications system, the termination/signal injector configured to be installed at one or both ends of a conductor, the termination/signal injector comprising:
a first jumper connected to a first power line, a second power line, a third power line, and a protective earth line, the first jumper for connecting to a power bus cable electrically coupled to a power supply, the power bus cable including a first phase wire, a second phase wire, a third phase wire, and a protective earth ground wire, the first power line configured to connect to the first phase wire, the second power line configured to connect to the second phase wire, the third power line configured to connect to the third phase wire, and the protective earth line configured to connect to the protective earth ground wire;
at least a second jumper connected to a first signal line, a second signal line, and a third signal line, the second jumper for connecting to a signal cable electrically coupled to a remote hub, the remote hub spaced apart from the power supply at a distance, the signal cable including a first signal wire, a second signal wire, and a third signal wire, the first signal line configured to connect to the first signal wire, the second signal line configured to connect to the second signal wire, and the third signal line configured to connect to the third signal wire;
a coupling including a first set of coupling capacitors, a second set of coupling capacitors, and a third set of coupling capacitors, the first set of coupling capacitors having a first capacitor in parallel with a second capacitor connected between the first signal line and the first power line, the second set of capacitors having a third capacitor in parallel with a fourth capacitor connected between the second signal line and the second power line, and the third set of capacitors having a fifth capacitor in parallel with a sixth capacitor connected between the third signal line and the third power line, wherein the first, second, and third sets of coupling capacitors are configured to couple a signal received from the signal cable to the power bus cable and restrict electric power in the power bus cable from reaching the remote hub;
a shunt resistor configured to connect to a ground, the shunt resistor connected to at least one of the first, second, or third signal lines, wherein the shunt resistor is configured to reduce signal loss and maintain ground potential on the first, second, and third signal lines; and
a termination unit having a termination impedance, the termination unit including a plurality of resistors between the first signal line, the second signal line, and the third signal line.

10. The termination/signal injector as recited in claim 9, wherein the signal cable includes a ground connection, and the second jumper is configured to connect the ground connection to a ground.

11. The termination/signal injector as recited in claim 9, wherein the power bus cable carries three-phase AC power.

12. The termination/signal injector as recited in claim 9, wherein the power bus cable carries single phase AC power.

13. The termination/signal injector as recited in claim 9, wherein the power bus cable carries three pole DC power.

14. The termination/signal injector as recited in claim 9, further comprising a resistor/capacitor (RC) unit including the shunt resistor and a seventh capacitor configured to connect to a ground, the RC unit connected to the at least one of the first, second, or third signal lines.

15. A signal injector for an energy transmission and communications system, the signal injector configured to be installed at one or both ends of a conductor, the signal injector comprising:
a first jumper connected to a plurality of power lines, the first jumper for connecting to a power bus cable electrically coupled to a power supply, the power bus cable including a plurality of phase wires, the plurality of power lines configured to connect to the plurality of phase wires;
at least a second jumper connected to a plurality of signal lines, the second jumper for connecting to a signal cable electrically coupled to a remote hub, the remote hub spaced apart from the power supply at a distance, the signal cable including a plurality of signal wires, the plurality of signal lines configured to connect to the plurality of signal wires;
a coupling including at least a first set of coupling capacitors, the first set of coupling capacitors configured to couple a signal received from the signal cable to the power bus cable and restrict electric power in the power bus cable from reaching the remote hub; and
a shunt resistor configured to connect to a ground, the shunt resistor connected to at least one of the plurality of signal lines, wherein the shunt resistor is configured to reduce signal loss and maintain ground potential on the plurality of signal lines.

16. The signal injector as recited in claim 15, further comprising a termination unit having a termination impedance, the termination unit including a plurality of resistors between the first signal line, the second signal line, and the third signal line.

17. The signal injector as recited in claim 15, wherein the power bus cable carries three-phase AC power.

18. The signal injector as recited in claim 15, wherein the power bus cable carries single phase AC power.

19. The signal injector as recited in claim 15, wherein the power bus cable carries three pole DC power.

20. The signal injector as recited in claim 15, further comprising a resistor/capacitor (RC) unit including the shunt resistor and configured to connect to a ground, the RC unit connected to the at least one of the plurality of signal lines.
